# EUROPEAN PATENT APPLICATION

(11) **EP 4 243 344 A1**
(43) Date of publication of application: **13.09.2023**
(21) Application number: 22195485.2
(22) Date of filing: 14.09.2022
(51) Int. Cl.: H04L 9/40, H04L 9/32

(54) **CERTIFICATE MANAGEMENT DEVICE, CERTIFICATE MANAGEMENT SYSTEM AND CERTIFICATE MANAGEMENT METHOD**

(30) Priority: 11.03.2022 JP 2022037837
(71) Applicant: Hitachi, Ltd., Tokyo 100-8280 (JP)
(72) Inventor: NISHIJIMA, Nao, Tokyo, 100-8280 (JP)
(74) Representative: MERH-IP Matias Erny Reichl Hoffmann Patentanwälte PartG mbB

(57) **Abstract**

The present invention makes it possible to reduce the management cost of a user who becomes the target of certification by a WEB server (140) and management by a certification authority. A certificate management device includes a communication device which accesses a network (440) of a blockchain service, and an arithmetic unit which executes processing of acquiring predetermined user information from a management device of a user ID in the blockchain service to generate a private key (111) of the user (170), processing of requesting a certification authority to issue a certificate based on the user information to acquire the certificate of the user (170), and processing of distributing the private key (111) and the certificate to a predetermined device for the opportunity to generate a transaction regarding the user (170).

## Description

### CROSS-REFERENCE TO RELATED APPLICATION

This application claims priority pursuant to Japanese patent application No. 2022-037837, filed on March 11, 2022, the entire disclosure of which is incorporated herein by reference.

### BACKGROUND

The present invention relates to a certificate management device, a certificate management system, and a certificate management method.

A blockchain is one of distributed ledger technologies. The blockchain is a kind of distributed database, which is a series of blocks in which transactions issued from each node and consensus-formed are collected every predetermined period.

Each block constituting the above-mentioned blockchain contains a time stamp and a hash value of a previous block. Therefore, it is very difficult to retroactively change any single block on the blockchain. In other words, it can be said that it is highly tamper-resistant.

Such a blockchain is distributed to a plurality of locations on a distributed ledger network, that is, each distributed ledger node, and is stored with the same contents. In other words, the data held by the blockchain is not held and managed centrally as in the conventional system.

Further, with smart contracts, it is also possible to automatically execute and manage transactions as appropriate and to flexibly implement various functions. It is also possible to implement endorsements which certify the validity of a result of executing a transaction with a smart contract.

The smart contract is performed on the latest information about data manipulation indicated by the transaction stored in the block. It is also possible to implement a state database that holds this latest information.

The issuance of the above-mentioned transaction is often performed through a WEB server or the like, rather than a user directly executing a program. Therefore, user management is required to control the log-in of the user to the WEB server.

Further, the reliability of the transaction execution result is ensured by the user electronically signing the transaction, and the distributed ledger node electronically signing the result of execution of the smart contract. Therefore, the certification authority server which issues the certificate also needs to do user management.

Several blockchain services have been proposed as user management and certificate management methods (refer to https://cloud.ibm.com/docs/blockchain?topic=blockchain-ibp-v2-apis and https://cloud.ibm.com/docs/blockchain?topic=blockchain-cert-mgmt).

In a distributed ledger system in an enterprise, it is rare for user themselves to manipulate commands and throw transactions . On the other hand, the transaction processing is often started via the WEB server.

Therefore, it is necessary to perform authentication processing for access to the WEB server for each user. Further, in order for the user to issue a certificate to accompany the transaction, the certification authority also needs to register the user. As a result, double management of the user is performed.

The above non-patent documents have proposed a service which manages users, but users who access the WEB or API and users managed by a certification authority are managed separately, and hence the above-mentioned dual management has not been eliminated.

### SUMMARY

Therefore, an object of the present invention is to provide a technique capable of reducing the management cost of a user who becomes the target of certification by a WEB server and management by a certification authority.

A certificate management device of the present invention for solving the above problems includes a communication device which accesses a network of a blockchain service, and an arithmetic unit which executes processing of acquiring predetermined user information from a management device of a user ID in the blockchain service to generate a private key of the user, processing of requesting a certification authority to issue a certificate based on the user information to acquire the certificate of the user, and processing of distributing the private key and the certificate to a predetermined device for the opportunity to generate a transaction regarding the user.

Further, a certificate management system of the present invention includes a certificate management device having a communication device which accesses a network of a blockchain service, and an arithmetic unit which executes processing of acquiring predetermined user information from a management device of a user ID in the blockchain service to generate a private key of the user, processing of requesting a certification authority to issue a certificate based on the user information to acquire the certificate of the user, and processing of distributing the private key and the certificate to a predetermined device for the opportunity to generate a transaction regarding the user.

In addition, a certificate management method includes the steps of causing a certificate management device in a blockchain service to have a communication device which accesses a network of the blockchain service, and causing the certificate management device to execute processing of acquiring predetermined user information from a management device of a user ID in the blockchain service to generate a private key of the user, processing of requesting a certification authority to issue a certificate based on the user information to obtain the certificate of the user, and processing of distributing the private key and the certificate to a predetermined device for the opportunity to generate a transaction regarding the user.

According to the present invention, it is possible to reduce the management cost of a user who becomes the target of certification by a WEB server and management by a certification authority.

### BRIEF DESCRIPTION OF THE DRAWINGS

FIG. 1 is a diagram showing a configuration example of a certificate management server according to the present embodiment;
FIG. 2 is a sequence diagram of pre-registration in the present embodiment;
FIG. 3 is a sequence diagram of transaction transmission in the present embodiment;
FIG. 4 is a diagram showing a configuration example of a distributed ledger node in the present embodiment;
FIG. 5 is a block diagram showing a configuration example of a distributed ledger node in the present embodiment;
FIG. 6 is a sequence diagram of pre-registration with no use of a confidential information management server in the present embodiment; and
FIG. 7 is a sequence diagram of transaction transmission with no use of the confidential information management server in the present embodiment.

### DETAILED DESCRIPTION

### [Background and Assumption of Invention]

In a blockchain, a private key held by a user and a certificate issued by a certification authority are sources of reliability regarding the user. Therefore, the leakage of the private key and the certificate directly leads to degradation in the reliability of data in the blockchain.

On the other hand, when using a permission-type enterprise blockchain service, user certification is required on a WEB server that serves as a service provision window. Viewed from a blockchain administrator, there is a problem in terms of management target data such as the above-mentioned user's private key, certificate and certification information being distributed, and the operational efficiency of the service and resources to build it.

### [First Embodiment]

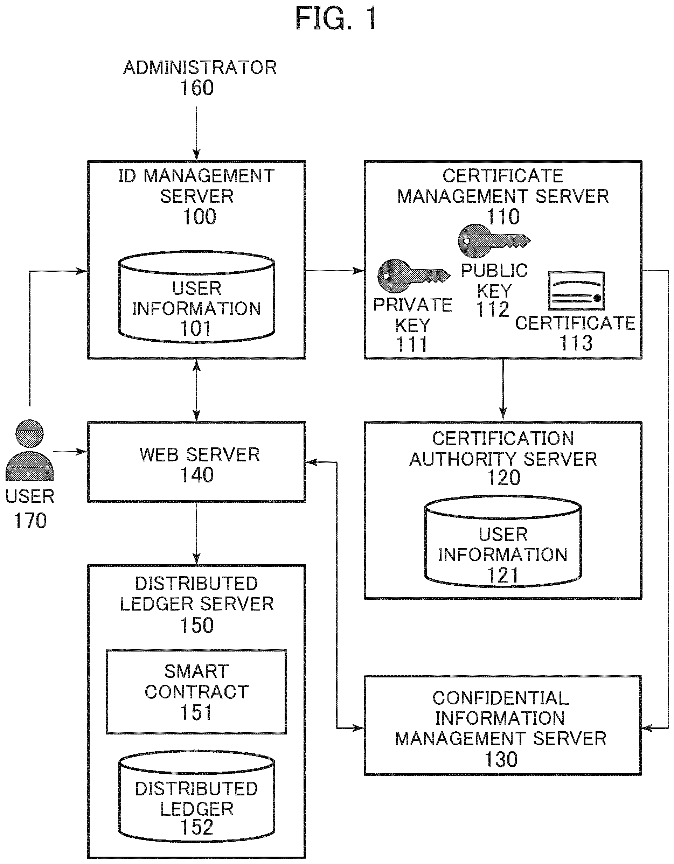

Hereinafter, embodiments of the present invention will be described in detail with reference to the drawings. FIG. 1 is a diagram showing a configuration example of a certificate management server according to the present embodiment. Based on the above background and assumption, a certificate management server 110 which is a certificate management device of the present embodiment performs processing of acquiring predetermined user information from a management device of a user ID in a blockchain service, that is, an ID management server 100 to generate a private key of the user, processing of requesting a certificate authority server 120 to issue a certificate based on the above-described user information to obtain the certificate of the user, and processing of distributing the private key and the certificate obtained as described above to a confidential information management server 130 for the opportunity to generate a transaction regarding the above-described user.

The certificate management server 110 which implements such a function is communicably connected to the ID management server 100, the certification authority server 120, and the confidential information management server 130 via an appropriate network.

Of these, the ID management server 100 has a database of user information 101. In response to the operation of an administrator 160 in the blockchain service, the ID management server 100 acquires user' s information (name, an e-mail address, etc.) from a predetermined terminal or the like, and stores it in the database of the user information 101.

Further, the ID management server 100 notifies the certificate management server 110 of the above-described user information after storing the user information. Upon receiving this notification, the certificate management server 110 generates various keys for the user and executes a certificate issuance request to the certification authority server 120.

When the user 170 for which such a key or certificate is generated utilizes the blockchain service, the user operates his/her own terminal to access a WEB server 140 and makes a certification request from here. On the other hand, the ID management server 100 receives the above-mentioned certification request by the user 170 from the WEB server 140, confirms this (that is, user certification based on the user information 101), and returns a token.

On the other hand, the certificate management server 110 holds a private key 111, a public key 112, and a certificate 113 for the user in a storage device. The certificate management server 110 receives the notification from the ID management server 100, registers the user in the certification authority server 120, and generates the private key 111 and the public key 112.

Further, the certificate management server 110 requests the certification authority server 120 to issue the certificate 113 by using the public key 112 generated as described above . The certificate management server 110 acquires the certificate 113 from the certification authority server 120, and transmits the certificate 113 and the already-generated private key 111 to the confidential information management server 130.

The certification authority server 120 holds a database of user information 121 in a storage device. The certification authority server 120 receives the user's information from the certificate management server 110 and stores the user' s information in the database of the user information 121.

Further, the certification authority server 120 issues the certificate 113 based on the public key received from the certificate management server 110.

The confidential information management server 130 encrypts the private key and certificate of the user and stores them securely. The confidential information management server 130 receives the private key 111 and the certificate 113 from the certificate management server 110.

Further, the confidential information management server 130 receives a token from the WEB server 140, and responds with the private key 111 and the certificate 113 of the user to the WEB server 140 on the basis of information of the token.

On the other hand, the WEB server 140 provides the user 170 with a GUI using a browser. The WEB server 140 receives a credential from the user 170 and confirms it with the ID management server 100 (that is, a request for user certification).

As a result of the above confirmation, when the credential is valid, the ID management server 100 responds with a token to the WEB server 140. The WEB server 140 receives the above-mentioned token from the ID management server 100 and transmits a predetermined acquisition request including the token to the confidential information management server 130 to acquire the private key 111 and the certificate 113 of the user.

Further, the WEB server 140 electronically signs the transaction generated for the above-mentioned user by using the private key 111 obtained from the confidential information management server 130, and transmits the transaction together with the certificate 113 to the distributed ledger server 150.

The distributed ledger server 150 receives the transaction from the WEB server 140, executes a smart contract 151, and stores the result of its execution in a distributed ledger 152.

Incidentally, it is assumed that the above-mentioned communication between each component is encrypted using a protocol such as https.

### <Sequence Example of Certificate Management Method: Pre-Registration>

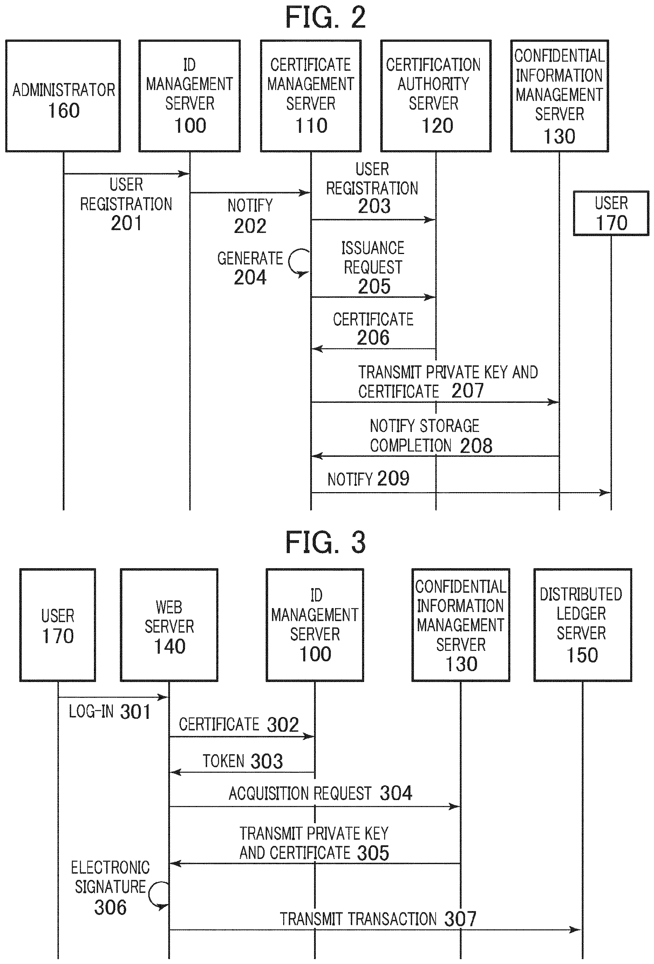

Subsequently, description will be made as to a sequence example corresponding to the certificate management method of the present embodiment. FIG. 2 is a sequence diagram corresponding to the certificate management method in the present embodiment, and is a diagram showing a processing procedure of user registration. The operation of each device in this case is as follows.

First, a predetermined terminal which has been operated by the administrator 160 performs user registration processing on the ID management server 100 (Step 201). In this user registration processing, the user's information (e.g. : name, affiliation, contact information, etc.) is transmitted to the ID management server 100.

Subsequently, the ID management server 100 notifies the certificate management server 110 of the registered user's information (Step 202).

The certificate management server 110 makes a user registration request to the certification authority server 120 using the user's information received in the notification from the ID management server 100 (Step 203). In response to this request, the certification authority server 120 registers the user's information in the database of the user information 121.

Subsequently, the certificate management server 110 generates the private key 111 and the public key 112 (Step 204). It is assumed that such key generation processing itself is executed by appropriately using an existing key generation engine or the like.

Next, the certificate management server 110 requests the certification authority server 120 to issue a certificate by using the public key 112 generated in Step 204 (Step 205).

The certification authority server 120 having received it issues a certificate, based on the public key 112 received at the request from the certificate management server 110, and responds with the public key to the certificate management server 110 (Step 206).

On the other hand, the certificate management server 110 transmits the private key 111 generated in Step 204 and the certificate 113 received from the certification authority server 120 to the confidential information management server 130 (Step 207).

The confidential information management server 130 receives the private key 111 and the certificate 113 from the certificate management server 110, encrypts and saves them, and notifies the certificate management server 110 of the completion of saving (Step 208).

On the other hand, the certificate management server 110 receives the notification of storage completion from the confidential information management server 130, executes a completion notification to the contact information (e.g., a mail address, etc.) acquired by the notification in Step 202 for the user 170 to be registered (Step 209), and terminates its processing.

### <Sequence Example of Certificate Management Method: Transaction transmission>

FIG. 3 is a sequence diagram of the certificate management method in the present embodiment, and specifically shows various processing accompanying the transaction transmission.

Here, it is assumed that the user 170 who has completed the pre-registration operates a predetermined terminal to access the WEB server 140. In this case, in response to the operation of the user 170, the above-mentioned terminal transmits credential information to the WEB server 140 in order to log in (Step 301).

On the other hand, the WEB server 140 transmits the credential information received from the above-mentioned terminal to the ID management server 100 (Step 302). In this case, the ID management server 100 confirms whether the credential information received from the WEB server 140 is registered in the user information 101, and if it is registered, responds with the token to the WEB server 140 (Step 303) .

On the other hand, the WEB server 140 transmits a request to acquire the private key and the certificate including the token obtained in response from the ID management server 100 to the confidential information management server 130 (Step 304).

The confidential information management server 130 identifies the stored private key 111 and the certificate 113 on the basis of the token included in the acquisition request from the WEB server 140, and responds with these to the WEB server 140 (Step 305).

The WEB server 140 electronically signs the transaction by the user 170 using the private key 111 received from the confidential information management server 130 (Step 306).

Further, the WEB server 140 attaches the certificate 113 to the electronically signed transaction and transmits it to the distributed ledger server 150 (Step 307), and ends its processing.

### <Example of Distributed Ledger System>

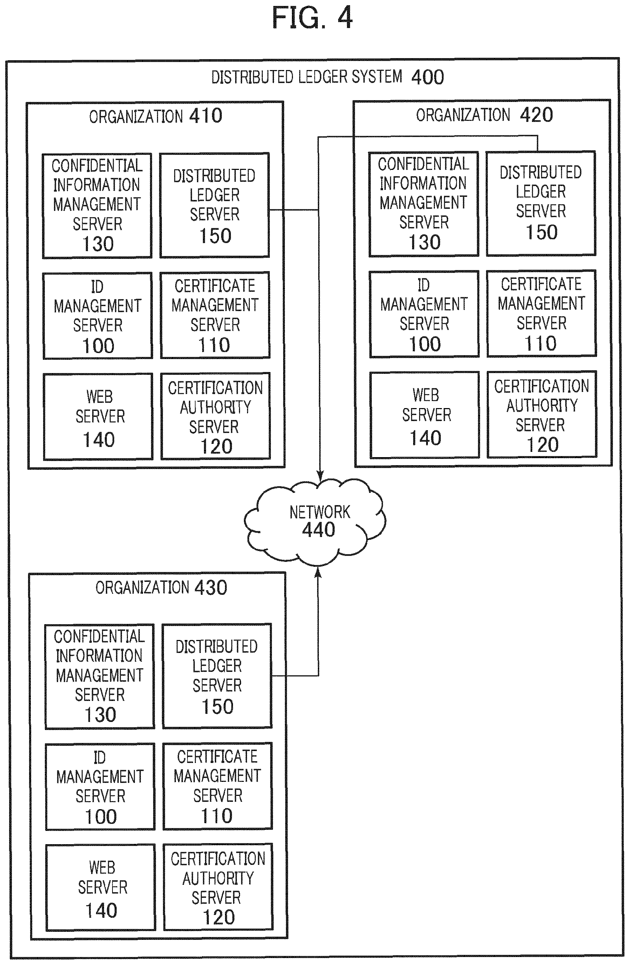

Here, description will be made as to a distributed ledger system 400 assumed in the present embodiment. FIG. 4 is a diagram showing a configuration example of the distributed ledger system 400 in the present embodiment. Incidentally, the distributed ledger system 400 in the present embodiment is comprised of one or more organizations.

The distributed ledger system 400 illustrated in FIG. 4 has three organizations 410, 420, and 430. Each organization, for example, the organization 410 has a confidential information management server 130, an ID management server 100, a certificate management server 110, a WEB server 140, and a certification authority server 120.

Incidentally, one or a plurality of distributed ledger servers 150 are arranged for each organization. The distributed ledger servers 150 can communicate with each other via a network 440.

### <Hardware Configuration Example>

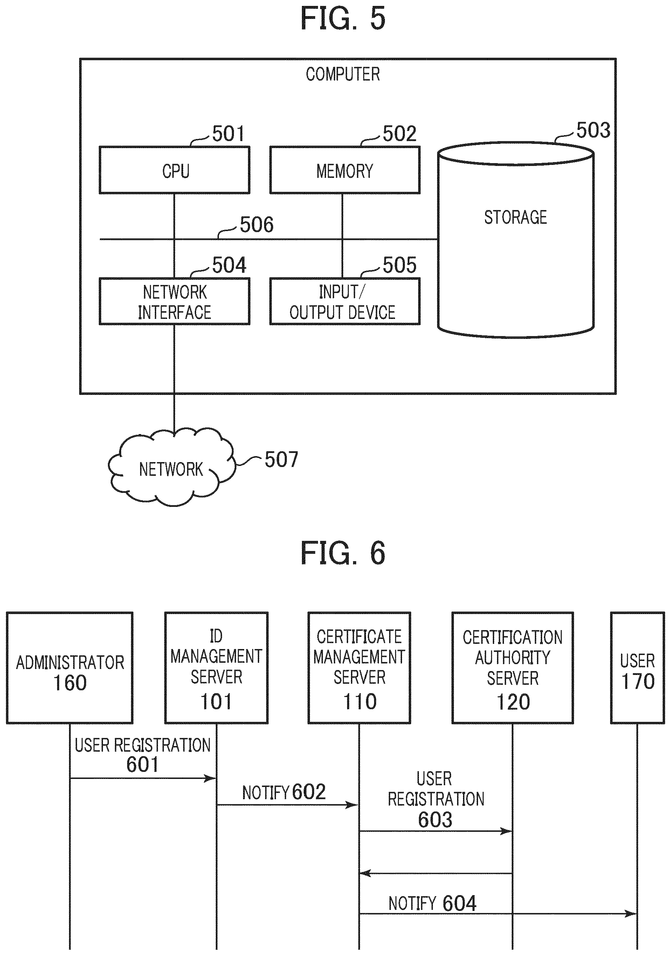

FIG. 5 shows the hardware configuration example of each device in the present embodiment. That is, there is shown a hardware configuration example of the ID management server 100, the certificate management server 110, the certification authority server 120, the confidential information management server 130, the WEB server 140, and the distributed ledger server 150.

Incidentally, here, for the sake of simplification of the explanation, each server will be described as a "device" constituting the certificate management system. Further, each configuration of such a device may be realized by a plurality of physical servers or an arbitrary number of methods, or may be realized by one server.

The device includes a CPU 501, a memory 502, a storage 503, a network interface 504, and an input/output device 505. Further, each of these configurations is connected via an interface 506 such as an internal bus.

Of these, the CPU 501 realizes various functions by executing the program recorded in the memory 502. The memory 502 is a volatile storage device which records a program executed by the CPU 501 and temporarily records various information when the program is executed.

Also, the storage 503 is a device which stores various data and programs, and corresponds to an HDD (Hard Disk Drive), an SSD (Solid State Drive), or the like.

Further, the network interface 504 provides an interface for connecting the device to the network 507.

In addition, the input/output device 505 assumes a keyboard or a mouse which accepts an input operation by an operator, a display which outputs a processing result by the CPU 501, or a touch panel which integrates those functions, or the like.

### [Second Embodiment]

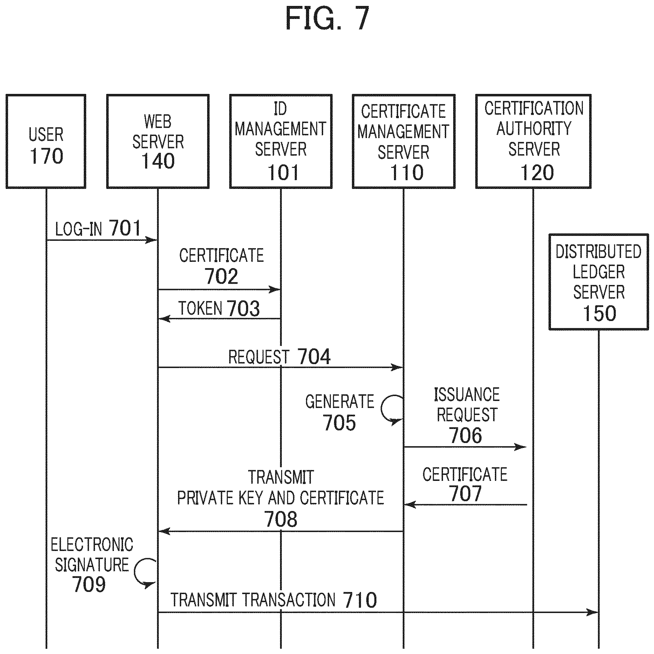

Subsequently, the mode of implementing the certificate management system and the certificate management method in a configuration which does not use the confidential information management server 130 will be described with reference to FIGS. 6 and 7. Incidentally, a system configuration according to the second embodiment shown here differs only in the presence or absence of the confidential information management server 130 in FIG. 1.

In this case, the terminal of the administrator 160 notifies the ID management server 100 of a user registration request including information of a predetermined user in response to the operation of the administrator 160 (Step 601).

On the other hand, the ID management server 100 receives the above-mentioned user registration request, executes predetermined user registration processing, and notifies the certificate management server 110 of the user's information (Step 602).

The certificate management server 110 makes a user registration request to the certification authority server 120 using the user's information received from the ID management server 100 (Step 603). The certification authority server 120 receives the above-mentioned user registration request and executes the predetermined user registration processing.

The certificate management server 110 obtains the notification of the completion of user registration from the certification authority server 120, and transmits it to the contact information (e.g., an e-mail address or the like) of the user 170 (Step 604).

Subsequently, description will be made as to a sequence example accompanying transaction transmission in the second embodiment with reference to FIG. 7. In this case, the terminal of the user 170 transmits the credential information for log-in to the WEB server 140 in response to the operation of the user 170 (Step 701).

The WEB server 140 transmits a certification request including the credential information received from the above-mentioned terminal to the ID management server 100 (Step 702).

On the other hand, the ID management server 100 confirms whether the credential information received from the WEB server 140 is registered in the user information 101. If it is registered, that is, if the user certification is successful, the ID management server 100 returns a token to the WEB server 140 (Step 703).

The WEB server 140 transmits a request to generate a private key and a certificate including the token received from the ID management server 100 to the certificate management server 110 (Step 704) .

The certificate management server 110 generates a private key 111 and a public key 112 based on the token received from the WEB server 140 (Step 705), and stores them therein.

Further, the certificate management server 110 requests the certification authority server 120 to issue a certificate by using the public key 112 generated in Step 705 (Step 706).

In this case, the certification authority server 120 issues the certificate based on the public key included in the above request and responds with it to the certificate management server 110 (Step 707) .

On the other hand, the certificate management server 110 transmits the private key 111 generated in Step 705 and the certificate 113 received in response from the certification authority server 120 to the WEB server 140 (Step 708).

The WEB server 140 electronically signs the above-mentioned user transaction using the private key 111 received from the certification authority server 120 (Step 709). Further, the WEB server 140 assigns the certificate 113 to the transaction to which the electronic signature is given and transmits the same to the distributed ledger server 150 (Step 710), and ends the processing.

### [Third Embodiment]

Incidentally, as described above, it is also possible to automatically update the expiration date of the certificate generated by the certification authority server 120. In this case, for example, the certificate management server 110 periodically accesses the confidential information management server 130 to confirm the expiration date of the certificate 113 managed there.

As a result of the above confirmation, if the expiration date has expired, the certificate is updated. This update is performed, for example, by the certificate management server 110 requesting the certification authority server 120 to issue a certificate again.

Further, the certificate management server 110 periodically accesses the user information 101 of the ID management server 100 and collates the user registered therein with the user registered in the user information 121 of the certification authority server 120.

As a result of the above collation, when a certain user is deleted in the user information 101 of the ID management server 100, the certificate management server 110 requests the certification authority server 120 to delete the information in the user information 121 regarding the user or invalidate the certificate. Further, the certificate management server 110 requests the confidential information management server 130 to delete the private key 111 and the certificate 113 stored in the confidential information management server 130 for the user.

Thus, the certificate management server 110 monitors the status of each user and automatically manages and updates the expiration date of the private key and the certificate, so that the registration status of the certificate, the private key, and the user can be managed securely and efficiently.

Although the best mode for carrying out the present invention and the like have been specifically described above, the present invention is not limited to this, and various modifications can be made within the scope not departing from the gist thereof.

According to the present embodiment as describe above, it is possible to reduce the user management cost of the distributed ledger system and further to safely store the private key and automatically revoke and update the certificate. Specifically, by generating the user' s private key and certificate on the server side and storing them safely, and quoting the information required for the certificate issued, revoked, or renewed by the certification authority from the certification of the WEB server, the management cost of user information can be reduced. That is, it is possible to reduce the management cost of the user who becomes the target of certification by the WEB server and management by the certification authority.

The description of the present specification reveals at least the following. That is, in the certificate management device of the present embodiment, the arithmetic unit may distribute the private key and the certificate to the confidential information management device in the blockchain service.

According to this, it is possible to while securely managing confidential information such as a private key and a certificate of each user, appropriately provide it when generating a transaction of a user in response to a request via a WEB server.

Further, in the certificate management device of the present embodiment, the arithmetic device may execute the generation of the private key and the acquisition of the certificate at each transaction generation opportunity, and distribute the private key and the certificate to the WEB server which performs the log-in processing of the user in the blockchain service.

According to this, it is not necessary to operate the above-mentioned confidential information management device, and it is also possible to generate and manage confidential information such as a private key and a certificate in a disposable form with a time limit. It is possible to more securely and efficiently manage private keys and the like.

Further, in the certificate management device of the present embodiment, when the arithmetic unit monitors the management device of the user ID and identifies a change in the user information or certificate expiration, the arithmetic unit may perform update processing for the certificate regarding the user.

According to this, it becomes possible to operate the management form with the time limit as described above more accurately, and it is possible to manage the private key and the like in a more secure and efficient form.

Further, in the certificate management system of the present embodiment, the certificate management device may distribute the private key and the certificate to the confidential information management device in the blockchain service.

In addition, in the certificate management system of the present embodiment, the certificate management device may execute the generation of the private key and the acquisition of the certificate at each transaction generation opportunity, and distribute the private key and the certificate to the WEB server that performs the log-in processing of the user in the blockchain service.

Furthermore, in the certificate management system of the present embodiment, when the certificate management device monitors the management device of the user ID and identifies a change in the user information or expiration of the certificate, it may perform update processing for the certificate regarding the user.

Additionally, the certificate management system of the present embodiment may include a WEB server which performs log-in processing of the user in the blockchain service, and has a communication device which accesses the network of the blockchain service, and an arithmetic unit which when the certification processing for the user accompanying the log-in request from the user is successful in the management device of the user ID, executes the processing of acquiring the token from the management device, the processing of requesting the confidential information management device or the certificate management device managing the private key and the certificate to acquire the private key and the certificate based on the token to acquire the private key and the certificate, and the processing of electronically signing the transaction of the user by using the private key and the certificate.

Further, in the certificate management method of the present embodiment, the WEB server which performs the log-in processing of the user in the blockchain service is provided with a communication device which accesses the network of the blockchain service. When the certification processing for the user accompanying the log-in request from the user is successful in the management device of the user ID, the WEB server may execute the processing of acquiring the token from the management device, the processing of requesting the confidential information management device or the certificate management device managing the private key and the certificate to acquire the private key and the certificate based on the token to acquire the private key and the certificate, and the processing of electronically signing the transaction of the user by using the private key and the certificate.

## Claims

1. A certificate management device comprising:
a communication device which accesses a network of a blockchain service; and
an arithmetic unit which executes processing of acquiring predetermined user information from a management device of a user ID in the blockchain service to generate a private key of the user, processing of requesting a certification authority to issue a certificate based on the user information to acquire the certificate of the user, and processing of distributing the private key and the certificate to a predetermined device for the opportunity to generate a transaction regarding the user.

2. The certificate management device according to claim 1, wherein the arithmetic unit distributes the private key and the certificate to a confidential information management device in the blockchain service.

3. The certificate management device according to claim 1, wherein the arithmetic unit generates the private key and acquires the certificate for each transaction generation opportunity, and distributes the private key and the certificate to a WEB server which performs log-in processing of the user in the blockchain service.

4. The certificate management device according to claim 3, wherein when the arithmetic unit monitors the management device of the user ID and identifies a change in the user information or expiration of the certificate, the arithmetic unit performs update processing for the certificate regarding the user.

5. A certificate management system comprising:
a certificate management device including:
a communication device which accesses a network of a blockchain service, and
an arithmetic unit which executes processing of acquiring predetermined user information from a management device of a user ID in the blockchain service to generate a private key of the user, processing of requesting a certification authority to issue a certificate based on the user information to acquire the certificate of the user, and processing of distributing the private key and the certificate to a predetermined device for the opportunity to generate a transaction regarding the user.

6. The certificate management system according to claim 5, wherein the certificate management device distributes the private key and the certificate to a confidential information management device in the blockchain service.

7. The certificate management system according to claim 5, wherein the certificate management device generates the private key and acquires the certificate for each transaction generation opportunity, and distributes the private key and the certificate to a WEB server which performs log-in processing of the user in the blockchain service.

8. The certificate management system according to claim 7, wherein when the certificate management device monitors the management device of the user ID and identifies a change in the user information or expiration of the certificate, the certificate management device performs update processing for the certificate regarding the user.

9. The certificate management system according to claim 1, including a WEB server which performs log-in processing of the user in the blockchain service and includes:
a communication device which accesses the network of the blockchain service, and
an arithmetic unit which when certification processing for the user accompanying a log-in request from the user is successful in the management device of the user ID, executes processing of acquiring a token from the management device, processing of requesting the confidential information management device or the certificate management device managing the private key and the certificate to acquire the private key and the certificate based on the token to obtain the private key and the certificate, and processing of electronically signing the transaction of the user by using the private key and the certificate.

10. A certificate management method comprising the steps of:
causing a certificate management device in a blockchain service to provide a communication device which accesses a network of the blockchain service; and
causing the certificate management device to execute processing of acquiring predetermined user information from a management device of a user ID in the blockchain service to generate a private key of the user, processing of requesting a certification authority to issue a certificate based on the user information to obtain the certificate of the user, and processing of distributing the private key and the certificate to a predetermined device for the opportunity to generate a transaction regarding the user.

11. The certificate management method according to claim 10, wherein a WEB server which performs log-in processing of the user in the blockchain service includes:
a communication device which accesses the network of the blockchain service, and
wherein when certification processing for the user accompanying a log-in request from the user is successful in the management device of the user ID, the WEB server executes processing of acquiring a token from the management device, processing of requesting a confidential information management device or the certificate management device managing the private key and the certificate to acquire the private key and the certificate based on the token to obtain the private key and the certificate, and processing of electronically signing the transaction of the user by using the private key and the certificate.
